# EUROPEAN PATENT APPLICATION

(11) **EP 4 160 832 A1**
(43) Date of publication of application: **05.04.2023**
(21) Application number: 21817936.4
(22) Date of filing: 04.06.2021
(51) Int. Cl.: H01S 3/098

(54) **MODE-LOCKING METHOD SELECTIVELY USING TWO DIFFERENT WAVELENGTHS, AND LASER DEVICE USING SAID METHOD**

(30) Priority: 05.06.2020 JP 2020098091
(71) Applicant: National University Corporation Saitama University, Saitama City, Saitama 338-8570 (JP); Sevensix Co., Ltd., Tokyo 106-6117 (JP)
(72) Inventor: SHIODA, Tatsutoshi, Saitama-shi, Saitama 338-8570 (JP); NISHIURA, Masanori, Saitama-shi, Saitama 338-8570 (JP)
(74) Representative: Michalski Hüttermann & Partner Patentanwälte mbB
(86) International application number: PCT/JP2021/021465
(87) International publication number: WO 2021/246531

(57) **Abstract**

To provide a mode-locked pulse photoproduction filter for easily realizing self-starting mode-locking, and a laser device for generating a picosecond or femtosecond-pulse laser light by including such filter, the laser device including an amplifying unit for amplifying and outputting a light inside a resonator, and the mode-locked pulse photoproduction filter having a first filter part for selectively outputting a first wavelength component that is a wavelength component of an oscillation band inside the resonator, and a second filter part for selectively outputting a second wavelength component that is a wavelength component different from the oscillation band inside the resonator.

## Description

### BACKGROUND

### 1. TECHNICAL FIELD

The present invention relates to a method and a laser device for easily realizing self-starting mode-locking by selectively using two different wavelengths.

### 2. RELATED ART

Conventionally, a mode-locked laser light source using an optical fiber or the like has been known as a laser device for outputting a laser light having a pulse width of several tens of picoseconds or less (for example, see Patent documents 1, 2).

### Prior Art Document

### Patent Document

Patent document 1: US 8,416,817
Patent document 2: US 7,940,816

### PROBLEM TO BE SOLVED

In a laser device for generating a picosecond or femtosecond-pulse laser light, it is preferable that a mode-locked laser oscillation is performed with an easy method, and that this is stabilized in a short time. In recent years, a mode-locked fiber laser that is fiber small-sized and low cost, and that has excellent environmental stability, has been used for many industrial applications. In particular, a mode-locked fiber laser that is formed with a polarization maintaining fiber (PMF) having excellent environmental stability and uses only an optical part showing normal dispersion in an oscillation wavelength of a laser (ANDi MLFL: All Normal Dispersion Mode-Locked Fiber Laser), can output high pulse energy, and thus it is suitable for application in fine processing and the like. In general, self-starting of mode-locking requires output adjustment of a semiconductor laser to be used as an excitation light source, polarization control, temperature control, and the like. Self-starting is difficult also in an ANDi MLFL formed by using a PMF, and self-starting of mode-locking requires complicated control such as output modulation of a semiconductor laser to be used as an excitation light source. Furthermore, self-starting has been particularly difficult in an ANDi MLFL that does not use an element such as a semiconductor saturable absorber mirror for a saturable absorbing part forming the ANDi MLFL, but uses non-linear polarization rotation or a non-linear amplifying loop mirror for the saturable absorbing part. In addition, although laser devices preferably have a wide choice of laser oscillation wavelengths, a mode-locked laser has low selectivity in oscillation wavelengths, and it is difficult to obtain a mode-locked laser oscillation in a wavelength having a small induced emission cross-sectional area.

### GENERAL DISCLOSURE

To solve the above-described problem, a first aspect of the present invention provides a laser device including a mode-locked pulse photoproduction filter (filter part) for easily realizing self-starting mode-locking, for generating a picosecond or femtosecond-pulse laser light by including such filter. The laser device may include, inside a resonator, an amplifying unit for amplifying and outputting a laser light. The mode-locked pulse photoproduction filter may be provided inside the resonator. A pass wavelength characteristic of the mode-locked pulse photoproduction filter may have local maximum values in at least two or more wavelengths. The mode-locked pulse photoproduction filter may selectively allow passage of a wavelength component of a light in accordance with that pass wavelength characteristic.

The pass wavelength characteristic of the mode-locked pulse photoproduction filter may have a first passband for selectively allowing passage of a first wavelength component that is a wavelength component of an oscillation wavelength of a laser light, and a second passband for selectively allowing passage of a second wavelength component that is a wavelength component different from the oscillation wavelength.

The filter part may be one filter provided at one place in a propagation path of the laser light. The filter part may have two or more filters provided at different places. Both the first passband and the second passband may be set in one band-pass filter. An optical fiber Bragg grating (will be referred to as the FBG) for selecting the first passband and the FBG for selecting the second passband may be provided in the propagation path of the laser light.

The pass wavelength characteristic of the filter part may have a local minimum value between two local maximum values. The local minimum value may be a value that is attenuated by -10 dB or more as compared to the lower local maximum value. The local minimum value may be attenuated by -20 dB or more as compared to that local maximum value. The local minimum value may be attenuated by -30 dB or more as compared to that local maximum value. Regarding the pass wavelength characteristic of the filter part, the two local maximum values may be connected. Regarding the pass wavelength characteristic of the filter part, the two local maximum values may not be connected. The pass wavelength characteristic of the filter part may have another component between the first passband and the second passband. The another component may be a linear component.

Regarding the laser light output by the laser device, a size of the second wavelength component may be 10% or less of the first wavelength component.

A passband width of a second filter part may be narrower than a passband width of a first filter part.

The passband width of the second filter part may be 0.2 nm or more.

The passband width of the second filter part may be 4.6 nm or less.

An attenuation rate of the second filter part with respect to the second wavelength component may be larger than an attenuation rate of the first filter part with respect to the first wavelength component.

A wavelength difference between a first center wavelength of the passband of the first filter part and a second center wavelength of the passband of the second filter part may be 18 nm or less.

The wavelength difference may be 9 nm or more.

The amplifying unit may include a Yb fiber. The first center wavelength and the second center wavelength both may be 1020 nm or more and 1100 nm or less.

The amplifying unit may include an Er fiber. The first center wavelength and the second center wavelength both may be 1530 nm or more and 1555 nm or less, or 1555 nm or more and 1600 nm or less.

The amplifying unit may include an Nd fiber. The first center wavelength and the second center wavelength both may be 1060 nm or more and 1080 nm or less, or 888 nm or more and 914 nm or less.

The amplifying unit may include a Tm fiber. The first center wavelength and the second center wavelength both may be 1960 nm or more and 2020 nm or less, or 1860 nm or more and 1960 nm or less.

The first passband and the second passband may be variable. When increasing the wavelength difference between the first center wavelength and the second center wavelength, the width of the first passband may be increased.

When reducing the wavelength difference between the first center wavelength and the second center wavelength, the width of the second passband may be reduced. Alternatively, the attenuation rate in the second passband may be increased.

The laser device may include a polarizer for changing the laser light to a linearly polarized light. The laser device may include a polarization maintaining fiber for propagating the laser light. The laser device may include a NALM functioning as a saturable absorber.

The amplifying unit may be a planar waveguide including rare earthes such as Yb or Er.

The laser device may include a laser input unit for coupling a laser light transmitted in an optical transmission unit and an excitation laser light. The laser input unit may be a wavelength division multiplex (WDM) coupler.

The laser device may include a laser output unit for outputting a predetermined percentage of the laser light transmitted in the optical transmission unit. An optical isolator for defining a circulating direction of the laser light may be provided between the laser input unit and the laser output unit.

The laser device may include a coupling part for coupling the optical transmission unit and the saturable absorbing part. The coupling part may separate the laser light input in a loop of the NALM into a component propagated in the loop in a clockwise manner, and a component propagated in the loop in an anti-clockwise manner.

The laser device may include a reflecting part for reflecting the laser light. The second filter part, the first filter part, and the reflecting part may be arranged in this order, from configurations close to the amplifying unit. The reflecting part may reflect the laser light of the first wavelength component passed the first filter part, to the first filter part.

A second aspect of the present invention provides a mode-locking method for mode locking a laser light. According to this method, a laser light is mode-locked by selectively allowing passage of a wavelength component of a light in accordance with a pass wavelength characteristic having local maximum values in at least two or more wavelengths, in a path propagating the laser light.

The summary of the invention described above does not necessarily describe all necessary features of the embodiments of the present invention. The present invention may also be a sub-combination of these features.

### BRIEF DESCRIPTION OF THE DRAWINGS

FIG. 1 is a diagram illustrating a configuration example of a laser device 100 according to an embodiment of the present invention.
FIG. 2 is a diagram illustrating an example of a pass wavelength characteristic of a filter part 10.
FIG. 3 is a diagram describing an energy level of an electron in an optical transmission unit 101.
FIG. 4 is a diagram illustrating an induced emission cross-sectional area of a Yb fiber used in an amplifying unit 20.
FIG. 5 is a conceptual diagram describing that an oscillation in a first wavelength can be stabilized in a short time by having a second filter part 10-2.
FIG. 6 is a diagram illustrating time waveforms and wavelength distributions of an excitation laser and a laser light, when the second filter part 10-2 is not provided.
FIG. 7 is a diagram illustrating the time waveforms and the wavelength distributions of the excitation laser and the laser light, when the second filter part 10-2 is provided.
FIG. 8 is a diagram illustrating configuration examples of the optical transmission unit 101 and a saturable absorbing part 102.
FIG. 9A is a diagram illustrating examples of a first passband 301 and a second passband 302 set in the filter part 10 of FIG. 8.
FIG. 9B is a diagram illustrating a wavelength distribution of a laser light output by the laser device 100, when using the first passband 301 and the second passband 302 illustrated in FIG. 9A.
FIG. 10A is a diagram illustrating other examples of the first passband 301 and the second passband 302.
FIG. 10B is a diagram illustrating the wavelength distribution of the laser light output by the laser device 100, when using the first passband 301 and the second passband 302 illustrated in FIG. 10A.
FIG. 11A is a diagram illustrating other examples of the first passband 301 and the second passband 302.
FIG. 11B is a diagram illustrating the wavelength distribution of the laser light output by the laser device 100, when using the first passband 301 and the second passband 302 illustrated in FIG. 11A.
FIG. 12A is a diagram illustrating other examples of the first passband 301 and the second passband 302.
FIG. 12B is a diagram illustrating the wavelength distribution of the laser light output by the laser device 100, when using the first passband 301 and the second passband 302 illustrated in FIG. 12A.
FIG. 13A is a diagram illustrating other examples of the first passband 301 and the second passband 302.
FIG. 13B is a diagram illustrating the wavelength distribution of the laser light output by the laser device 100, when using the first passband 301 and the second passband 302 illustrated in FIG. 13A.
FIG. 14A is a diagram illustrating other examples of the first passband 301 and the second passband 302.
FIG. 14B is a diagram illustrating the wavelength distribution of the laser light output by the laser device 100, when using the first passband 301 and the second passband 302 illustrated in FIG. 14A.
FIG. 15 is a diagram illustrating another configuration example of the filter part 10.
FIG. 16 is a diagram illustrating another configuration example of the optical transmission unit 101.

### DESCRIPTION OF EXEMPLARY EMBODIMENTS

Hereinafter, the present invention will be described through embodiments of the invention, but the following embodiments do not limit the claimed invention. In addition, not all of the combinations of features described in the embodiments are essential to the solving means of the invention.

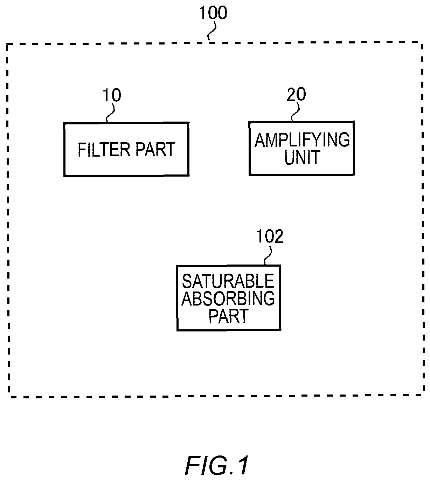

FIG. 1 is a diagram illustrating a configuration example of a laser device 100 according to an embodiment of the present invention. The laser device 100 is a device for generating a laser light having a wavelength component of a predetermined oscillation band. The laser device 100 may generate a laser light with a pulse width of a picosecond-order (for example, from 1 picosecond to 1000 picoseconds) or a femtosecond-order (for example, from 1 femtosecond to 1000 femtoseconds). In the present specification, among wavelengths of the laser light output by the laser device 100, a wavelength having a largest intensity will be referred to as the first wavelength (or the oscillation wavelength). In addition, among the light included in the laser light output by the laser device 100, a component of the first wavelength will be referred to as the first wavelength component. The oscillation band may be a band having the first wavelength as its center.

The laser device 100 includes a filter part 10, an amplifying unit 20, and a saturable absorbing part 102 provided in a path where a laser light is propagated. The saturable absorbing part 102 absorbs a wavelength of a time component having a relatively low intensity, among an entered laser light. In addition, the saturable absorbing part 102 propagates a time component of a relatively high intensity without absorption. In other words, the saturable absorbing part 102 narrows the band of a pulse of the laser light in a time axis by absorbing a skirt part having a low intensity and allowing passage of a peak part having a large intensity, among the time waveform of the laser light. The pulse of the laser light can be shortened by providing the saturable absorbing part 102.

The filter part 10 and the amplifying unit 20 may have a configuration including an optical fiber, or may have a configuration being connected to the optical fiber. The filter part 10 and the amplifying unit 20 may be arranged in a loop where a laser light is circulating, or may be arranged in a path where a laser light is reciprocating. In addition, each of the filter part 10, the amplifying unit 20, and the saturable absorbing part 102 may be a single part or circuit that is arranged at a specific location in the laser device 100, or may be formed with a plurality of parts or circuits that are dispersedly arranged in the laser device 100. Furthermore, the laser device 100 in its entirety may function as the filter part 10, the amplifying unit 20, or the saturable absorbing part 102. In other words, each component part such as the optical fiber of the laser device 100 may be combined to exert the function as the filter part 10, the amplifying unit 20, or the saturable absorbing part 102. The optical fiber propagating the laser light in the laser device 100 may at least partially be a polarization maintaining fiber (PMF). The entire optical fiber forming the laser device 100 may be the polarization maintaining fiber.

In addition, a common part may function as at least two of the filter part 10, the amplifying unit 20, and the saturable absorbing part 102. For example, the amplifying unit 20 may exert at least a part of the function of the filter part 10, or the saturable absorbing part 102 may exert at least a part of the function of the filter part 10.

The amplifying unit 20 amplifies an intensity of a passing laser light. The amplifying unit 20 may have an optical fiber added with an impurity such as, for example, rare earthes. That impurity is, for example, ytterbium (Yb), but is not limited thereto. In addition, the material of the optical fiber is, for example, quartz glass, but is not limited thereto. The amplifying unit 20 may have a planar waveguide including rare earthes such as Yb or Er (erbium).

The filter part 10 has a predetermined pass wavelength characteristic, and selectively allows passage of a wavelength component of a light (in the present example, an amplified spontaneous emission or a laser light) in accordance with that pass wavelength characteristic. The pass wavelength characteristic is a characteristic representing a percentage of an intensity of a light allowed passage to an intensity of an entering light, in each wavelength. As an example, the filter part 10 is a band-pass filter for attenuating wavelength components other than a predetermined passband. The pass wavelength characteristic of the filter part 10 has local maximum values in at least two or more wavelengths. The filter part 10 of the present example functions as a filter for allowing passage of a mode-locked pulse for starting an oscillation of a laser light.

It should be noted that the laser device 100 may have a polarizer for changing a laser light propagated in the optical fiber to a linearly polarized light. An intensity of a laser light passing through the polarizer from the filter part 10 may be adjusted by adjusting a polarization axis of the polarization maintaining fiber between the polarizer and the filter part 10.

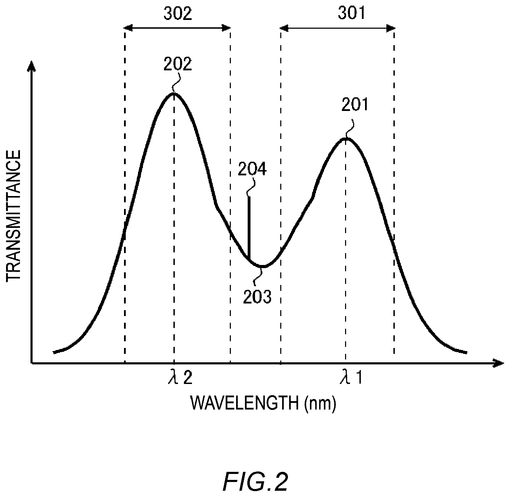

FIG. 2 is a diagram illustrating an example of the pass wavelength characteristic of the filter part 10. In FIG. 2, the horizontal axis represents wavelengths of a light propagated in the filter part 10, and the vertical axis represents a transmittance of each wavelength in the filter part 10. The transmittance is a percentage of an intensity of a light after passing the filter part 10 to the intensity of the light before passing the filter part 10.

The pass wavelength characteristic of the filter part 10 may be the pass wavelength characteristic of the entire laser device 100. As an example, if a laser light circulates in a predetermined loop path, the pass wavelength characteristic of the filter part 10 may be the pass wavelength characteristic when the laser light circulates in the loop path once. In addition, if a laser light reciprocates a predetermined path, the pass wavelength characteristic of the filter part 10 may be the pass wavelength characteristic when the laser light reciprocates that path once. If the laser device 100 includes an explicit filter, the pass wavelength characteristic of the filter part 10 may be the characteristic of that filter. The explicit filter is a part having a publicly known structure as a filter such as, for example, a FBG.

As described above, the pass wavelength characteristic has at least two local maximum values (in the present example, a local maximum value 201 and a local maximum value 202). In the present example, a wavelength of the local maximum value 201 corresponds to the oscillation wavelength (will be referred to as the first wavelength λ1) of the laser device 100. However, the wavelength of the local maximum value 201 does not have to exactly match the oscillation wavelength. In addition, a wavelength of the local maximum value 202 (will be referred to as the second wavelength λ2) is a wavelength different from the oscillation wavelength. Furthermore, although the pass wavelength characteristic of the present example has a mountain-shaped characteristic having each local maximum value as an apex, the pass wavelength characteristic of the present example may have a flat characteristic in which the local maximum values are continuously shown with a predetermined wavelength width.

The filter part 10 has a first passband 301 including the first wavelength λ1 and a second passband 302 including the second wavelength λ2. FIG. 2 illustrates an example in which the first wavelength λ1 is larger than the second wavelength λ2, but the first wavelength λ1 may be smaller than the second wavelength λ2. In the present example, each passband is a band in which the transmittance is half or more of the local maximum values. As described above, the first passband 301 is a band including the first wavelength λ1 (oscillation wavelength). In other words, the first passband 301 selectively allows passage of the first wavelength component, which is the wavelength component of the oscillation band, among an entered amplified spontaneous emission or laser light. The second passband 302 is a band including the second wavelength λ2 different from the first wavelength λ1. In the present specification, a component of the second wavelength λ2 included in the amplified spontaneous emission or laser light propagated in the path will be referred to as the second wavelength component. The second passband 302 selectively allows passage of the second wavelength component, which is the wavelength component different from the oscillation band, among the entered amplified spontaneous emission or laser light.

The filter part 10 may be one filter provided at one place in a propagation path of a laser light (i.e., inside a resonator of the laser light), or may have two or more filters provided at different places. As an example, both the first passband 301 and the second passband 302 may be set in one band-pass filter. In another example, an optical fiber Bragg grating (will be referred to as the FBG) selecting the first passband 301 and the FBG selecting the second passband 302 may be provided in the propagation path of the laser light.

It should be noted that the pass wavelength characteristic of the filter part 10 may have a local minimum value 203 between the two local maximum values. The local minimum value 203 may be a value that is attenuated by -10 dB or more as compared to the lower local maximum value. The local minimum value 203 may be attenuated by -20 dB or more, or by -30 dB or more, as compared to that local maximum value. In addition, regarding the pass wavelength characteristic of the filter part 10, the two local maximum values may be connected, or may not be connected. The two local maximum values being connected is a case in which, for example, the local minimum value 203 is 10% or more of the lower local maximum value. In addition, the pass wavelength characteristic of the filter part 10 may have another component 204 between the first passband 301 and the second passband 302. The component 204 may be, for example, a linear component.

By allowing the pass wavelength characteristic of the filter part 10 to have the two local maximum values, in at least a part of the propagation path of the laser light, the laser light includes the first wavelength component and the second wavelength component. By allowing the laser light to include the second wavelength component different from the first wavelength component (oscillation wavelength), an oscillation in the first wavelength λ1 can be induced, and the oscillation in the first wavelength λ1 can be stabilized in a short time.

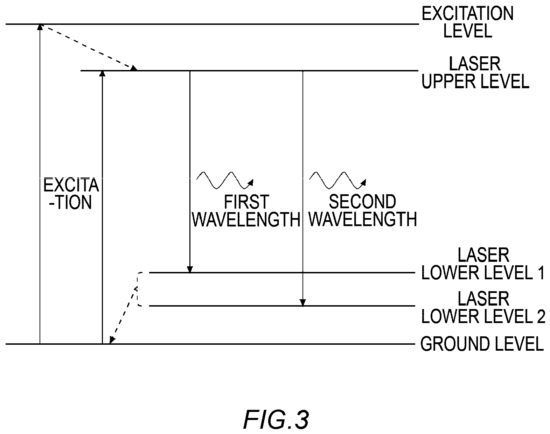

FIG. 3 is a diagram describing an energy level of an electron of an optical fiber to which Yb is added, in the amplifying unit 20. FIG. 3 shows the example including the optical fiber to which Yb is added, but a laser medium is not limited thereto, and an optical fiber to which other rare earthes are added may be used. A planar waveguide of LINBO3, phosphate glass system, or quartz glass system to which rare earthes are added may also be used. An excitation level and a laser upper level may be the same, and the energy level is not limited thereto. The electrons of the amplifying unit 20 are in a state of inverted population in which the number of electrons of the laser upper level is larger than laser lower levels 1 and 2.

By transition of the electrons of the excitation level to a lower level, a light of a wavelength in accordance with an energy level difference will be emitted. By transition of the electrons of the laser upper level to various levels, various wavelength components will be included in the laser light. In the present example, the laser lower level corresponding to the first wavelength λ1 will be referred to as the laser lower level 1, and the laser lower level corresponding to the second wavelength λ2 will be referred to as the laser lower level 2.

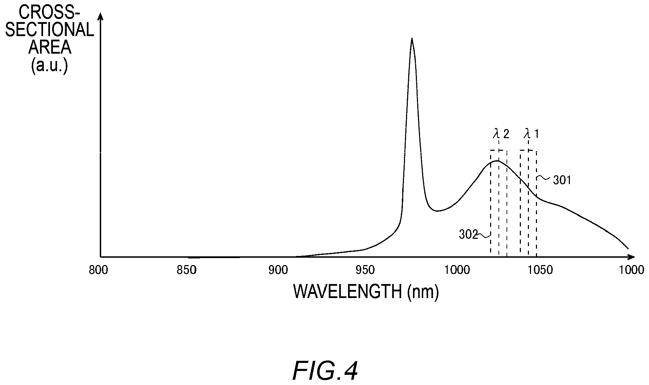

FIG. 4 is a diagram illustrating an induced emission cross-sectional area of the Yb fiber used in the amplifying unit 20. In FIG. 4, the horizontal axis is wavelengths, and the vertical axis is cross-sectional areas. FIG. 4 shows the example in which the optical fiber includes Yb, but the material of the optical fiber is not limited thereto.

The first wavelength λ1 in the filter part 10 is set to a wavelength in which the induced emission cross-sectional area is a certain level or more, in the distribution characteristic of the wavelength component illustrated in FIG. 4. By selectively allowing passage of the first wavelength λ1, the oscillation with the first wavelength λ1 can be facilitated. In addition, the second wavelength λ2 in the filter part 10 is also set to a wavelength in which the induced emission cross-sectional area is a certain level or more, in the distribution characteristic of the wavelength component. The second wavelength λ2 may be set to a wavelength in which the cross-sectional area in the distribution characteristic of the wavelength component is larger than the first wavelength λ1.

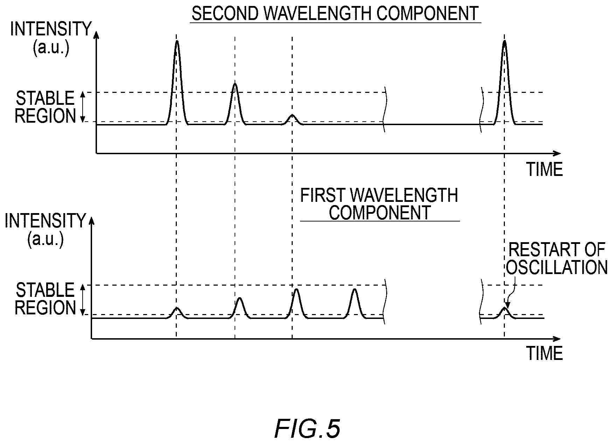

FIG. 5 is a conceptual diagram describing that the oscillation in the first wavelength λ1 can be stabilized in a short time by having the second passband 302. In FIG. 5, time waveforms of the first wavelength component and the second wavelength component included in a laser light transmitted in the amplifying unit 20 are separately illustrated.

In the amplifying unit 20 of FIG. 1, if a large induced emission occurs in the second wavelength component due to a Q switch operation, a quantity of electrons of the laser lower level 2 described in FIG. 3 will be increased. In this manner, the inverted population between the laser upper level and the laser lower level 2 becomes small, and the second wavelength component becomes smaller over time. On the other hand, since a large induced emission does not occur in the first wavelength component, the inverted population is maintained between the laser upper level and the laser lower level 1. In this manner, the first wavelength component is moderately amplified, and the oscillation in the first wavelength is likely to occur in a short time.

In a general mode-locked laser, once a mode-locked pulse oscillation is stopped, readjustment of a driving current of a semiconductor laser for laser excitation is required to obtain a mode-locked pulse again. This generally takes time from about several tens of seconds to several minutes. In the present method, even if the oscillation in the first wavelength is stopped due to some causes, the oscillation in the first wavelength can be restarted automatically and rapidly by having the second wavelength component.

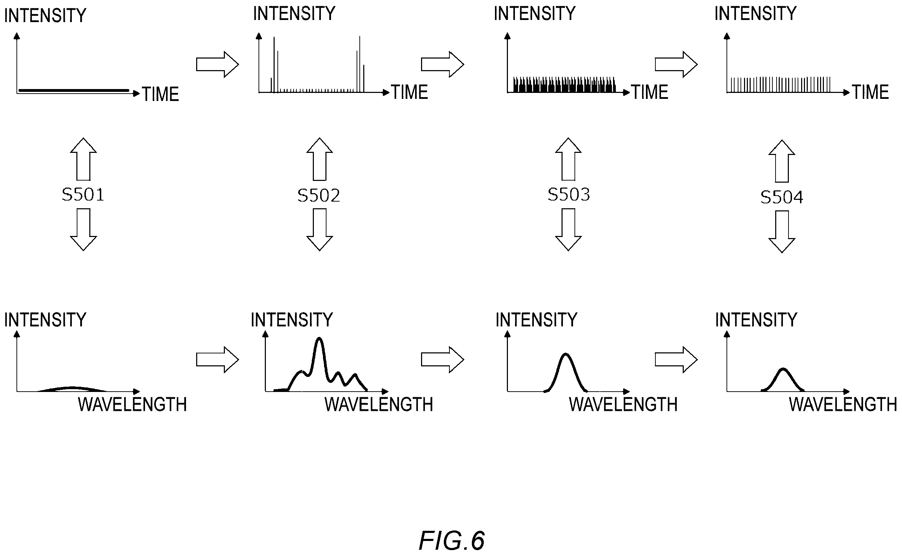

FIG. 6 is a diagram illustrating time waveforms and wavelength distributions of an excitation laser and a laser light, when the first passband 301 is provided and the second passband 302 is not provided. The laser light is the laser light output by the laser device 100.

In step 501, an intensity of the excitation laser light is increased. By increasing the intensity of the excitation laser light, an oscillation component having a large intensity is generated in the laser light (step S502). The state of step S502 continues from several seconds to several minutes. By maintaining the intensity of the excitation laser light, a plurality of mode-locked pulses are generated in the time waveform (step S503). By reducing the intensity of the excitation laser light in this state, a mode-locked pulse having a predetermined oscillation wavelength will be remained (step S504).

In this manner, when the second passband 302 is not provided, the intensity of the excitation laser light is largely increased to start an oscillation of the laser light, and a Q switch oscillation for generating a pulse of an extremely high intensity is caused (step S502). After that, the high-intensity pulse is divided into a plurality of pulses, and it will become a state that is called a multi-pulse oscillation in which one or more pulses are present in an oscillator (step S503). Finally, by reducing the intensity of the excitation laser light, a stable single pulse oscillation is realized (step S504). Thus, about several minutes may be required to generate the laser light having the predetermined oscillation wavelength.

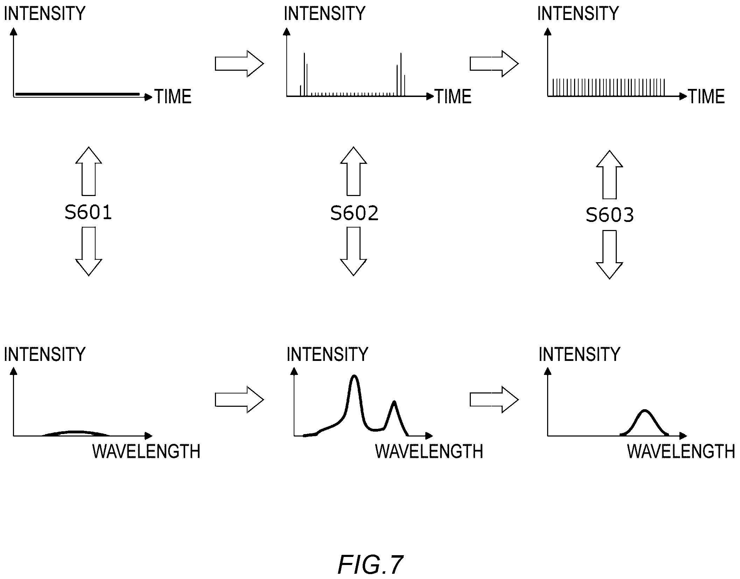

FIG. 7 is a diagram illustrating the time waveforms and the wavelength distributions of the excitation laser and the laser light, when the first passband 301 and the second passband 302 are provided. As described above, the oscillation with the first wavelength λ1 is enabled by providing the second passband 302. In the present example, the intensity of the excitation laser light does not have to be increased in step S601, and a pulse that is generated with the Q switch oscillation is relatively small. As a result, the oscillation with the first wavelength λ1 starts without going through the multi-pulse oscillation state (S603). As an example, when using the Yb fiber, and setting the first wavelength λ1 to 1040 nm and the second wavelength λ2 to 1030 nm, the laser light can be generated within two seconds on average.

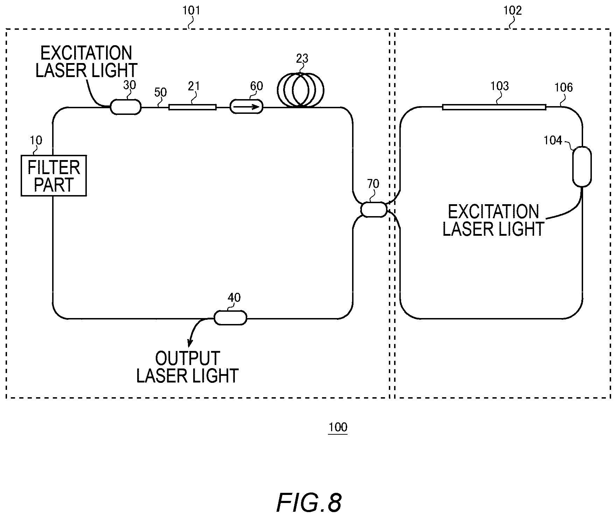

FIG. 8 is a diagram illustrating a configuration example of the laser device 100. The laser device 100 of the present example has an optical transmission unit 101 and the saturable absorbing part 102. The optical transmission unit 101 has the filter part 10, an elongated fiber part 23 functioning as the amplifying unit 20, an amplifying unit 21, a laser input unit 30, a laser output unit 40, an optical fiber 50, an optical isolator 60, and a coupling part 70. Each constituent element of the optical transmission unit 101 is connected to one another with the optical fiber 50. In the optical transmission unit 101 of the present example, a laser light loops in the optical transmission unit 101. In addition, the optical transmission unit 101 may be an All-fiber device in which each constituent element is formed with an optical fiber. The optical transmission unit 101 of the present example is connected to the saturable absorbing part 102 with the optical fiber 50, and the laser light reciprocates between the optical transmission unit 101 and the saturable absorbing part 102. In the present example, a Nonlinear Amplifying Loop Mirror (NALM) is used as the saturable absorbing part 102.

An excitation laser light is input to the laser input unit 30. The laser input unit 30 couples the laser light transmitted in the optical transmission unit 101 and the excitation laser light, for transmission in the optical fiber 50. The laser input unit 30 is, for example, a wavelength division multiplex (WDM) coupler.

The amplifying unit 21 of the present example is provided between the laser input unit 30 and the laser output unit 40. It should be noted that, in the optical transmission unit 101 having a loop shape, between Configuration A and Configuration B refers to a region from Configuration A to Configuration B in a circulating direction of the laser light. The amplifying unit 21 may have an optical fiber to which Yb is added (YDF). The elongated fiber part 23 is provided between the laser input unit 30 and the laser output unit 40. The fiber part 23 of the present example is provided between the amplifying unit 21 and the laser output unit 40. The fiber part 23 may have a non-polarization maintaining fiber (Non-PMF). Only either of the fiber part 23 and the amplifying unit 21 may be provided. The fiber part and the amplifying unit 21 amplify the intensity of the laser light transmitted in the optical transmission unit 101 with the excitation laser light. The arrangement of the elongated fiber part 23 and the amplifying unit 21 is not limited to the example of FIG. 8.

The optical isolator 60 for defining the circulating direction of the laser light may be provided between the laser input unit 30 and the laser output unit 40. The optical isolator 60 of the present example is provided between the amplifying unit 21 and the elongated fiber part 23.

The laser output unit 40 of the present example is arranged between the elongated fiber part 23 and the filter part 10. The laser output unit 40 outputs a predetermined percentage of the laser light transmitted in the optical transmission unit 101. For example, the laser output unit 40 outputs about 10% to 80% of the passing laser light to the outside as an output laser light. A lower limit of the proportion of the output laser light to the laser light passing the laser output unit 40 may be smaller than 10% (for example, 1%). In addition, an upper limit of that proportion may be about 90%. The remaining laser light is transmitted in the optical transmission unit 101. The laser output unit 40 is, for example, an output coupler (OC).

The filter part 10 allows passage of wavelength components of a set passband, and attenuates wavelength components outside the passband, among the laser light transmitted in the optical transmission unit 101. The filter part 10 of the present example is an optical band-pass filter in which the first passband 301 and the second passband 302 described in FIG. 1 to FIG. 7 are set. The optical isolator 60 may be provided between the filter part 10 and the laser output unit 40.

The coupling part 70 couples the optical transmission unit 101 and the saturable absorbing part 102. The coupling part 70 of the present example separates the laser light input to a loop of the NALM into a component propagated in the loop in a clockwise manner, and a component propagated in the loop in an anti-clockwise manner. The coupling part 70 of the present example is arranged between the fiber part 23 and the laser output unit 40, but the arrangement of the coupling part 70 is not limited thereto.

The saturable absorbing part 102 receives the laser light passed the laser input unit 30, and absorbs wavelength components forming time components of pulses having a predetermined intensity or less. The saturable absorbing part 102 inputs, among the laser light received from the optical transmission unit 101, wavelength components higher than a predetermined intensity to the optical transmission unit 101.

The saturable absorbing part 102 of the present example generates a phase difference between a component propagated in a clockwise manner and a component propagated in an anti-clockwise manner, in accordance with the difference in intensities. In the coupling part 70, the laser light is propagated from the saturable absorbing part 102 to the optical transmission unit 101, with a transmissive characteristic in accordance with the phase difference of the two components. Thus, the saturable absorbing part 102 attenuates a time component having a relatively low intensity, and propagates a time component having a relatively high intensity in a clockwise direction of the optical transmission unit 101.

The saturable absorbing part 102 of the present example has an amplifying unit 103, an optical fiber 106, and a laser input unit 104. Each constituent element of the saturable absorbing part 102 is connected to one another in a loop shape with the optical fiber 106. The laser input unit 104 couples an excitation laser light and a laser light transmitted in the saturable absorbing part 102 in an anti-clockwise manner.

The amplifying unit 103 is arranged in a path proceeding from the coupling part 70 to the laser input unit 104 in a clockwise manner, and it amplifies the laser light. The amplifying unit 103 is, for example, an optical fiber to which Yb is doped.

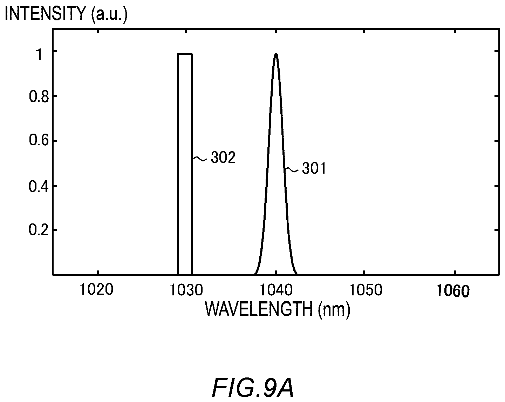

FIG. 9A is a diagram illustrating examples of the first passband 301 and the second passband 302 set in the filter part 10 of FIG. 8. The vertical axis of FIG. 9A represents a ratio of the intensity of a laser light output by the filter part 10 to the intensity of a laser light input to the filter part 10. In other words, if the intensity is 1, attenuation in the filter part 10 is 0 db.

The first passband 301 of the present example has a center wavelength (first wavelength) of 1040 nm, and a bandwidth of 1.8 nm. In addition, the second passband 302 has a center wavelength (second wavelength) of 1030 nm, and a bandwidth of 1.5 nm. In the example of FIG. 9A, the first passband 301 has a Gaussian shape, and the second passband 302 has a rectangular shape, but the shapes of the first passband 301 and the second passband 302 each may select either of the Gaussian shape and the rectangular shape.

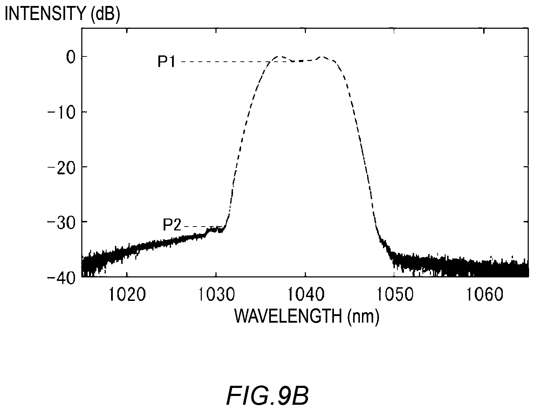

FIG. 9B is a diagram illustrating a wavelength distribution of the laser light output by the laser device 100, when using the first passband 301 and the second passband 302 illustrated in FIG. 9A. In the present example, the laser light having the wavelength distribution illustrated in FIG. 9B is obtained instantly after (within 5 seconds) inputting the excitation laser light. In contrast, when setting only the first passband 301 for the filter part 10, the laser light having the wavelength distribution illustrated in FIG. 9B is obtained about 20 minutes after inputting the excitation laser light. In other words, it is understood that the laser light oscillated with the first wavelength can be instantly obtained by setting the second passband 302.

It should be noted that, in the laser light output by the laser device 100, a size P2 of the second wavelength component may be 10% or less of a size P1 of the first wavelength component. The P2 may be 1% or less, or 0.1 % or less, of the P1.

The passband width of the second passband 302 may be smaller than the passband width of the first passband 301. The width of the passband of the filter part 10 may be a width of a wavelength band in which the intensity of the wavelength component of the input laser light becomes half or less. In other words, it may be a width of a wavelength band in which the transmittance of the filter part 10 becomes 50% or more. The passband width of the second passband 302 may be 90% or less, 70% or less, or 50% or less, of the passband width of the first passband 301.

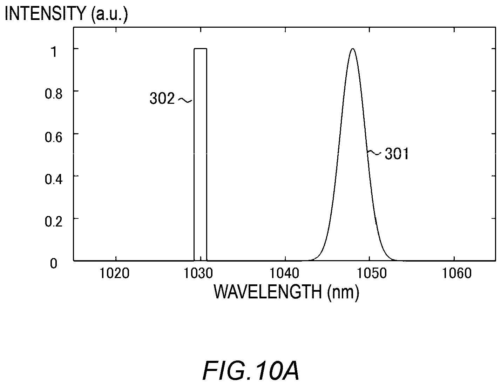

FIG. 10A is a diagram illustrating other examples of the first passband 301 and the second passband 302. The first passband 301 of the present example has a center wavelength (first wavelength) of 1048 nm, and a bandwidth of 3.5 nm. In addition, the second passband 302 is the same as the example of FIG. 9A.

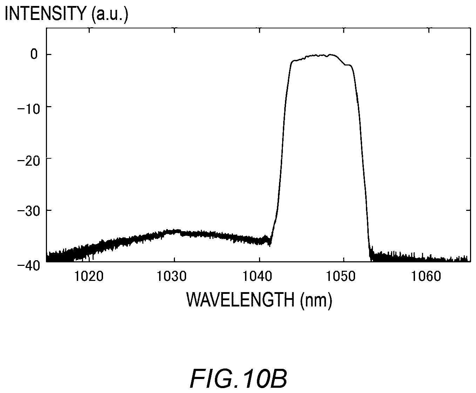

FIG. 10B is a diagram illustrating the wavelength distribution of the laser light output by the laser device 100, when using the first passband 301 and the second passband 302 illustrated in FIG. 10A. In the present example, the laser light having the wavelength distribution illustrated in FIG. 10B is obtained about 5 seconds after inputting the excitation laser light. In contrast, when setting only the first passband 301 for the filter part 10, the laser light oscillated with the first wavelength is not obtained.

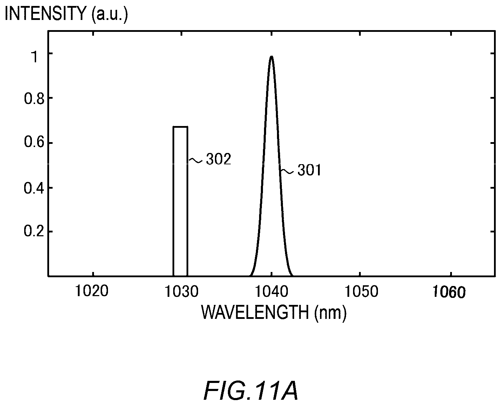

FIG. 11A is a diagram illustrating other examples of the first passband 301 and the second passband 302. The first passband 301 of the present example is the same as the example of FIG. 9A. The second passband 302 has a center wavelength (second wavelength) of 1030 nm, and a bandwidth of 1.8 nm. However, the second passband 302 attenuates -1.5 dB in the second wavelength. In contrast, in the first passband 301, attenuation in the first wavelength is 0 db.

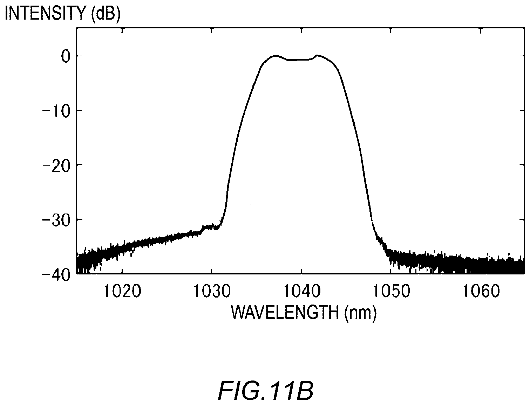

FIG. 11B is a diagram illustrating the wavelength distribution of the laser light output by the laser device 100, when using the first passband 301 and the second passband 302 illustrated in FIG. 11A. Also in the present example, the laser light having the wavelength distribution illustrated in FIG. 11B is obtained at least about 10 seconds after inputting the excitation laser light. In this manner, an attenuation rate of the second passband 302 with respect to the second wavelength component may be larger than an attenuation rate of the first passband 301 with respect to the first wavelength component. The attenuation rate of the second passband 302 with respect to the second wavelength component may be 90% or less, 70% or less, or 50% or less, of the attenuation rate of the first passband 301 with respect to the first wavelength component. In this manner, suppression of the second wavelength component is facilitated in the laser light output from the laser device 100.

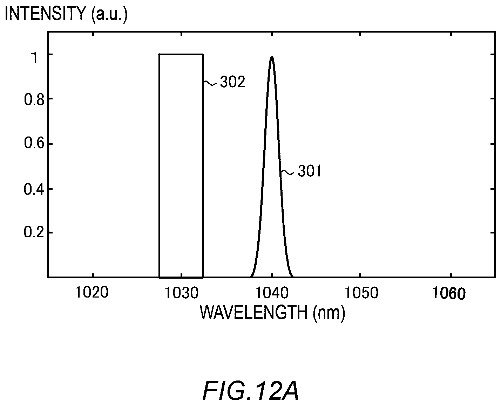

FIG. 12A is a diagram illustrating other examples of the first passband 301 and the second passband 302. The first passband 301 of the present example is the same as the example of FIG. 9A. The second passband 302 has a center wavelength (second wavelength) of 1030 nm, and a bandwidth of 4.6 nm.

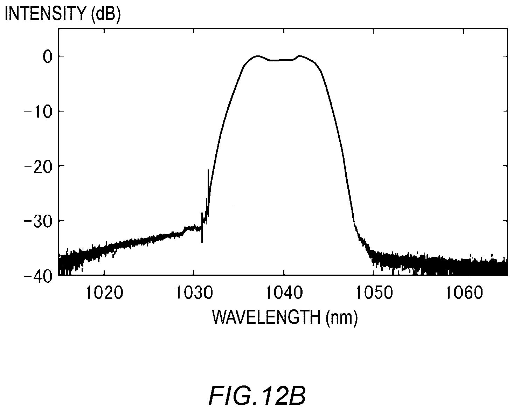

FIG. 12B is a diagram illustrating the wavelength distribution of the laser light output by the laser device 100, when using the first passband 301 and the second passband 302 illustrated in FIG. 12A. Also in the present example, the laser light having the wavelength distribution illustrated in FIG. 12B is obtained at least about 10 seconds after inputting the excitation laser light. However, since the bandwidth of the second passband 302 is made larger, a part of the laser light passed the second passband 302. On the other hand, the wavelength component of the laser light passed the first passband 301 is largely spread due to a self-phase modulation effect inside the laser device 100. A part of the laser light passed the second passband 302 overlaps with a part of the wavelength spread due to the self-phase modulation effect, and interference of these wavelength components is caused. Thus, a noise component near the second wavelength is large. The bandwidth of the second passband 302 is preferably 4.6 nm or less.

It should be noted that the laser light oscillated with the first wavelength is obtained as in the case of the example illustrated in FIG. 9B even if the bandwidth of the second passband 302 is made smaller to 0.2 nm. However, if the bandwidth of the second passband 302 is made too small, the laser oscillation with the first wavelength may become difficult. The bandwidth of the second passband 302 is preferably 0.2 nm or more.

In the present example, the bandwidth of the second passband 302 is changed, but the laser light of the first wavelength can be similarly obtained also by changing the bandwidth of the first passband 301. However, if the bandwidth of the first passband 301 is made too small, it will become difficult to obtain the laser light of the first wavelength, and thus the bandwidth of the first passband 301 may be 0.8 nm or more. The bandwidth of the first passband 301 may be 50% or more of the second passband 302.

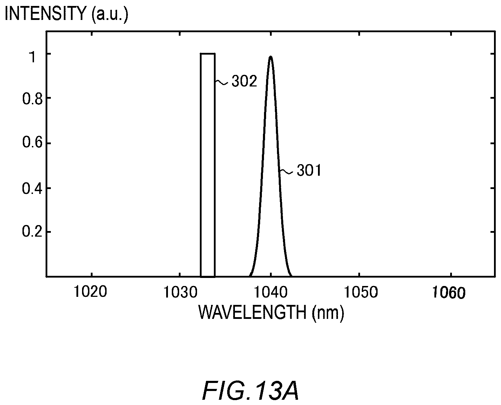

FIG. 13A is a diagram illustrating other examples of the first passband 301 and the second passband 302. The first passband 301 of the present example is the same as the example of FIG. 9A. The second passband 302 has a center wavelength (second wavelength) of 1033 nm, and a bandwidth of 1.5 nm.

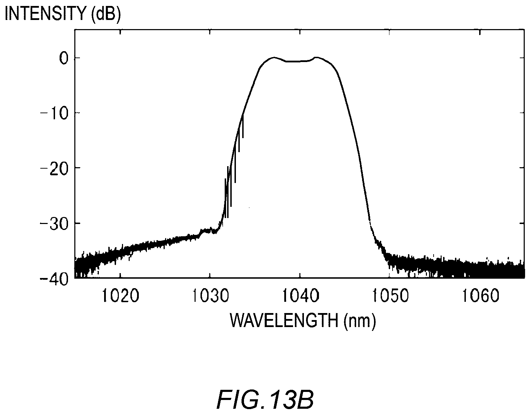

FIG. 13B is a diagram illustrating the wavelength distribution of the laser light output by the laser device 100, when using the first passband 301 and the second passband 302 illustrated in FIG. 13A. Also in the present example, the laser light having the wavelength distribution illustrated in FIG. 13B is obtained at least about 10 seconds after inputting the excitation laser light. However, since the wavelength difference between the second passband 302 and the first passband 301 is made small, a spectral component passed the second passband 302 is likely to interfere with a spectral component that is spread due to the self-phase modulation effect after passing the first passband 301. Thus, as illustrated in FIG. 13B, the noise component becomes larger in the band of 1033 nm to 1040 nm. In the example of FIG. 13A, the second wavelength of the second passband 302 is changed, but the laser light of the first wavelength can be obtained also by changing the first wavelength of the first passband 301.

The wavelength difference between the center wavelength (first wavelength) of the first passband 301 and the center (second wavelength) of the second passband 302 is preferably 9 nm or more. That wavelength difference may be 10 nm or more. In addition, a value in which the half of the bandwidth of each passband is reduced from that difference of the center wavelengths may be 7.35 nm.

Furthermore, if the wavelength difference between the first wavelength and the second wavelength is too large, it may be difficult to induce the light of the first wavelength even if the light of the second wavelength is generated. Thus, the wavelength difference between the first wavelength and the second wavelength is preferably 18 nm or less. That wavelength difference may be 15 nm or less, or 12 nm or less. In addition, the value in which the half of the bandwidth of each passband is reduced from that difference of the center wavelengths may be 16.35 nm or less.

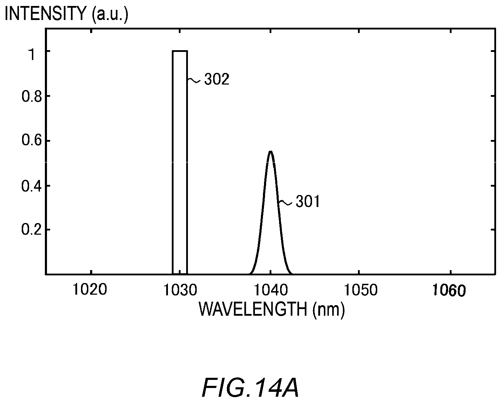

FIG. 14A is a diagram illustrating other examples of the first passband 301 and the second passband 302. The second passband 302 of the present example is the same as the example of FIG. 9A. The first passband 301 has a center wavelength (first wavelength) of 1040 nm, and a bandwidth of 1.8 nm. However, the first passband 301 attenuates by -2.8 dB in the first wavelength.

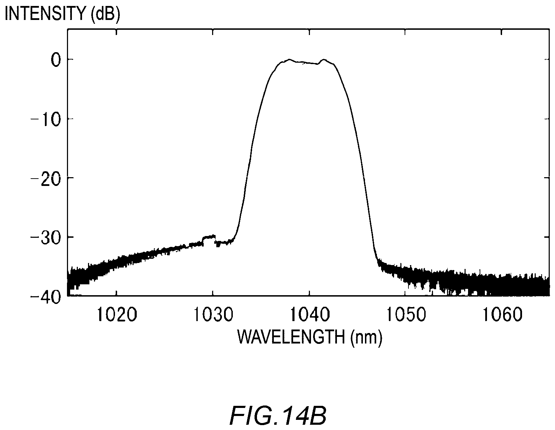

FIG. 14B is a diagram illustrating the wavelength distribution of the laser light output by the laser device 100, when using the first passband 301 and the second passband 302 illustrated in FIG. 14A. Also in the present example, the laser light having the wavelength distribution illustrated in FIG. 14B is obtained at least about 10 seconds after inputting the excitation laser light. However, since the attenuation rate of the first passband 301 is made larger, the relative size of the second wavelength component (1030 nm) is larger than the example of FIG. 9B. Thus, the attenuation rate in the first wavelength of the first passband 301 may be 50% or more, 70% or more, or 90% or more of the attenuation rate in the second wavelength of the second passband 302.

The first passband 301 and the second passband 302 are preferably bands in accordance with the material of the optical fiber of the amplifying unit 20. In other words, as described in FIG. 4, each passband is preferably set in wavelength bands where the intensity of the laser light generated with the optical fiber is a certain level or more.

As an example, if the amplifying unit 20 includes a Yb fiber, the first wavelength and the second wavelength are both preferably 1020 nm or more and 1050 nm or less. If the amplifying unit 20 includes an Er fiber, the first wavelength and the second wavelength are both preferably 1530 nm or more and 1555 nm or less, or 1555 nm or more and 1600 nm or less. One of the wavelengths may be 1530 nm or more and 1555 nm or less, and the other wavelength may be 1555 nm or more and 1600 nm or less. If the amplifying unit 20 includes an Nd fiber, the first wavelength and the second wavelength are both preferably 1060 nm or more and 1080 nm or less, or 888 nm or more and 914 nm or less. One of the wavelengths may be 1060 nm or more and 1080 nm or less, and the other wavelength may be 888 nm or more and 914 nm or less. If the amplifying unit 20 includes a Tm fiber, the first wavelength and the second wavelength are both preferably 1960 nm or more and 2020 nm or less, or 1860 nm or more and 1960 nm or less. One of the wavelengths may be 1960 nm or more and 2020 nm or less, and the other wavelength may be 1860 nm or more and 1960 nm or less.

The first passband 301 and the second passband 302 may be variable. In other words, the center wavelength and the bandwidth of each passband may be variable. For example, the center wavelength (first wavelength) of the first passband 301 may be changed in accordance with the wavelength of a laser light to be generated. The filter part 10 may increase the bandwidth of the first passband 301, when increasing the wavelength difference between the center wavelength (first wavelength) of the first passband 301 and the center wavelength (second wavelength) of the second passband 302. Although it becomes difficult to induce the first wavelength component due to the increase in the wavelength difference, the oscillation with the first wavelength can be facilitated by increasing the bandwidth of the first passband 301.

In addition, when reducing the wavelength difference between the first wavelength and the second wavelength, the bandwidth of the second passband 302 may be reduced. Although the percentage of the second wavelength component interfering the first passband 301 increases due to the reduction in the wavelength difference, that interference can be suppressed by reducing the bandwidth of the second passband 302. In addition, when reducing the wavelength difference between the first wavelength and the second wavelength, the attenuation rate in the second wavelength of the second passband 302 may be increased. That interference can be suppressed also in this manner.

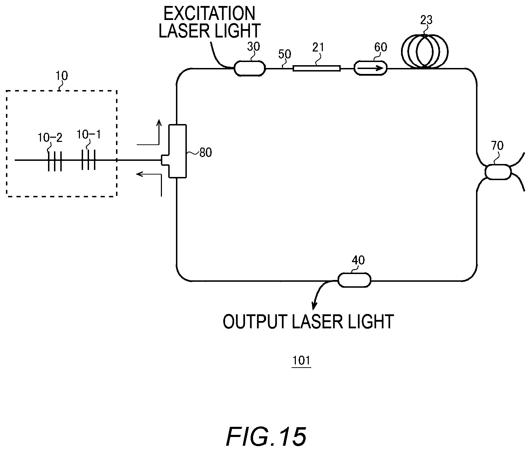

FIG. 15 is a diagram illustrating another configuration example of the filter part 10. The filter part 10 of the present example is connected to the loop-shaped optical fiber 50 via a coupling part 80. The coupling part 80 propagates a laser light circulating in the loop-shaped optical fiber 50 to the filter part 10, and propagates a light from the filter part 10 to the loop-shaped optical fiber 50.

The filter part 10 of the present example has a first filter part 10-2 for selecting and propagating the light of the first passband 301, and a second filter part 10-2 for selecting and propagating the light of the second passband 302. The first filter part 10-1 and the second filter part 10-2 of the present example are FBGs. The first filter part 10-1 and the second filter part 10-2 are provided in series with respect to the coupling part 80. Either of the first filter part 10-1 and the second filter part 10-2 may be provided close to the coupling part 80.

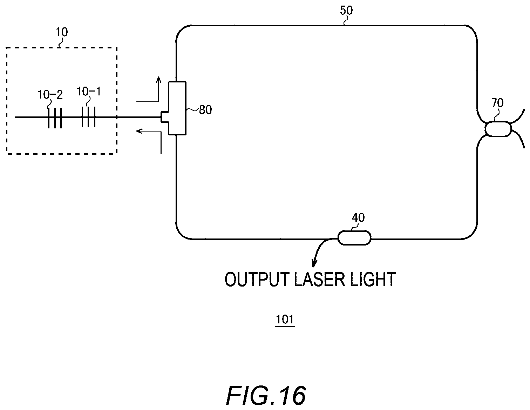

FIG. 16 is a diagram illustrating another configuration example of the optical transmission unit 101. The optical transmission unit 101 of the present example is different from the optical transmission unit 101 described in FIG. 8 or FIG. 15 in that the amplifying unit 20, the amplifying unit 21, the laser input unit 30, and the optical isolator 60 are not provided. The other structures are the same as the example of Fig. 8 or Fig. 15. The optical fiber 50 may function as the amplifying unit 20 or the amplifying unit 21. The filter part 10 of the present example is arranged between the laser output unit 40 and the coupling part 70. The filter part 10 may be connected to the optical fiber 50 via the coupling part 80 as in the case of the example of FIG. 15.

It should be noted that, in the examples of FIG. 1 to FIG. 16, the saturable absorbing part 102 is a NALM, but an absorber such as a semiconductor saturable absorber mirror (SESAM) may be used for the saturable absorbing part 102. In addition, a saturable absorbing mechanism using a Nonlinear Optical Loop Mirror (NOLM) or Nonlinear Polarization Rotation (NPR) may be used.

While the embodiments of the present invention have been described, the technical scope of the present invention is not limited to the above-described embodiments. It is apparent to persons skilled in the art that various alterations or improvements can be added to the above-described embodiments. It is also apparent from the scope of the claims that the embodiments added with such alterations or improvements can be included in the technical scope of the present invention.

The operations, procedures, steps, and stages of each process performed by a device, system, program, and method shown in the claims, embodiments, or diagrams can be realized in any order as long as the order is not explicitly indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: filter part; 10-1: first filter part; 10-2: second filter part; 20: amplifying unit; 21: amplifying unit; 23: fiber part; 30: laser input unit; 40: laser output unit; 50: optical fiber; 52: wavelength characteristic; 60: optical isolator; 70: coupling part; 80: coupling part; 100: laser device; 101: optical transmission unit; 102: saturable absorbing part; 103: amplifying unit; 104: laser input unit; 106: optical fiber; 201: local maximum value; 202: local maximum value; 203: local minimum value; 204: component; 301: first passband; 302: second passband.

## Claims

1. A laser device for generating a laser light, comprising:
an amplifying unit that is provided in a path propagating the laser light, for amplifying and outputting the laser light; and
a filter part that is provided in the path, for selectively allowing passage of a wavelength component of a light in accordance with a pass wavelength characteristic, wherein the pass wavelength characteristic has local maximum values in at least two or more wavelengths.

2. The laser device according to claim 1, wherein the pass wavelength characteristic of the filter part has:
a first passband comprising a wavelength of any of the local maximum values, for selectively allowing passage of a first wavelength component that is a wavelength component of an oscillation wavelength of the laser light; and
a second passband comprising a wavelength of any of the local maximum values, for selectively allowing passage of a second wavelength component that is a wavelength component different from the oscillation wavelength.

3. The laser device according to claim 2, wherein
a size of the second wavelength component is 10% or less of the first wavelength component, in the laser light output by the laser device.

4. The laser device according to claim 2 or 3, wherein
a width of the second passband is narrower than a width of the first passband.

5. The laser device according to any one of claims 2 to 4, wherein
the amplifying unit comprises a Yb fiber, and
a center wavelength of the first passband and a center wavelength of the second passband are both 1020 nm or more and 1100 nm or less.

6. The laser device according to any one of claims 2 to 4, wherein
the amplifying unit comprises an Er fiber, and
a center wavelength of the first passband and a second center wavelength of the passband are both 1530 nm or more and 1555 nm or less, or 1555 nm or more and 1600 nm or less.

7. The laser device according to any one of claims 2 to 4, wherein
the amplifying unit comprises an Nd fiber, and
a center wavelength of the first passband and a center wavelength of the second passband are both 1060 nm or more and 1080 nm or less, or 888 nm or more and 914 nm or less.

8. The laser device according to any one of claims 2 to 4, wherein
the amplifying unit comprises a Tm fiber, and
a center wavelength of the first passband and a center wavelength of the second passband are both 1960 nm or more and 2020 nm or less, or 1860 nm or more and 1960 nm or less.

9. The laser device according to any one of claims 2 to 8, wherein
the first passband and the second passband are variable, and
when increasing a wavelength difference between a center wavelength of the first passband and a center wavelength of the second passband, a width of the first passband is increased.

10. The laser device according to any one of claims 2 to 8, wherein
the first passband and the second passband are variable, and
when reducing a wavelength difference between a center wavelength of the first passband and a center wavelength of the second passband, a width of the second passband is reduced or an attenuation rate in the second passband is increased.

11. The laser device according to any one of claims 1 to 10, further comprising a polarization maintaining fiber for propagating the laser light.

12. The laser device according to any one of claims 1 to 11, further comprising a NALM functioning as a saturable absorber.

13. A mode-locking method for mode locking a laser light, wherein
the laser light is mode locked by, in a path propagating the laser light, selectively allowing passage of a wavelength component of a light in accordance with a pass wavelength characteristic having local maximum values in at least two or more wavelengths.

## Amended claims

### Amended claims under Art. 19.1 PCT

**1.** (Amended) A laser device for generating a laser light, comprising
a filter part that is provided in a resonator, for selectively allowing passage of a wavelength component of a light in accordance with a pass wavelength characteristic, wherein the pass wavelength characteristic has local maximum values in at least two or more wavelengths.

**2.** The laser device according to claim 1, wherein the pass wavelength characteristic of the filter part has:
a first passband comprising a wavelength of any of the local maximum values, for selectively allowing passage of a first wavelength component that is a wavelength component of an oscillation wavelength of the laser light; and
a second passband comprising a wavelength of any of the local maximum values, for selectively allowing passage of a second wavelength component that is a wavelength component different from the oscillation wavelength.

**3.** The laser device according to claim 2, wherein
a size of the second wavelength component is 10% or less of the first wavelength component, in the laser light output by the laser device.

**4.** The laser device according to claim 2 or 3, wherein
a width of the second passband is narrower than a width of the first passband.

**5.** (Amended) The laser device according to any one of claims 2 to 4, comprising an amplifying unit for amplifying the laser light in the resonator, wherein
the amplifying unit comprises a Yb fiber, and
a center wavelength of the first passband and a center wavelength of the second passband are both 1020 nm or more and 1100 nm or less.

**6.** (Amended) The laser device according to any one of claims 2 to 4, comprising an amplifying unit for amplifying the laser light in the resonator, wherein
the amplifying unit comprises an Er fiber, and
a center wavelength of the first passband and a second center wavelength of the passband are both 1530 nm or more and 1555 nm or less, or 1555 nm or more and 1600 nm or less.

**7.** (Amended) The laser device according to any one of claims 2 to 4, comprising an amplifying unit for amplifying the laser light in the resonator, wherein
the amplifying unit comprises a Nd fiber, and
a center wavelength of the first passband and a center wavelength of the second passband are both 1060 nm or more and 1080 nm or less, or 888 nm or more and 914 nm or less.

**8.** (Amended) The laser device according to any one of claims 2 to 4, comprising an amplifying unit for amplifying the laser light in the resonator, wherein
the amplifying unit comprises a Tm fiber, and
a center wavelength of the first passband and a center wavelength of the second passband are both 1960 nm or more and 2020 nm or less, or 1860 nm or more and 1960 nm or less.

**9.** The laser device according to any one of claims 2 to 8, wherein
the first passband and the second passband are variable, and
when increasing a wavelength difference between a center wavelength of the first passband and a center wavelength of the second passband, a width of the first passband is increased.

**10.** The laser device according to any one of claims 2 to 8, wherein
the first passband and the second passband are variable, and
when reducing a wavelength difference between a center wavelength of the first passband and a center wavelength of the second passband, a width of the second passband is reduced or an attenuation rate in the second passband is increased.

**11.** The laser device according to any one of claims 1 to 10, further comprising a polarization maintaining fiber for propagating the laser light.

**12.** The laser device according to any one of claims 1 to 11, further comprising a NALM functioning as a saturable absorber.

**13.** (Amended) The laser device according to any one of claims 2 to 10, wherein
the second wavelength component of the laser light allowed passage by the filter part induces an oscillation in the oscillation wavelength.

**14.** Added) The laser device according to any one of claims 1 to 13, wherein
the filter part allows passage of a mode-locked pulse for starting an oscillation of the laser light.

**15.** Added) A mode locking method for mode locking a laser light, wherein
the laser light is mode locked by, in a resonator of the laser light, selectively allowing passage of a wavelength component of a light in accordance with a pass wavelength characteristic having local maximum values in at least two or more wavelengths.
